# EUROPÄISCHE PATENTANMELDUNG

(11) **EP 3 734 557 A1**
(43) Veröffentlichungstag der Anmeldung: **04.11.2020**
(21) Anmeldenummer: 20157663.4
(22) Anmeldetag: 17.02.2020
(51) Int. Cl.: G07C 5/08, G06K 9/62, G06N 20/00

(54) **VERFAHREN ZUR BEREITSTELLUNG VON TRAININGSDATEN FÜR ADAPTIERBARE SITUATIONSERKENNUNGSALGORITHMEN SOWIE VERFAHREN ZUR AUTOMATISIERTEN SITUATIONSERKENNUNG VON BETRIEBSSITUATIONEN EINES FAHRZEUGS ZUR ÖFFENTLICHEN PERSONENBEFÖRDERUNG**

(30) Priorität: 30.04.2019 DE 102019206233
(71) Anmelder: Siemens Mobility GmbH, 81739 München (DE)
(72) Erfinder: Berger, Gisbert, 12487 Berlin (DE); Hoppe, Christof, 48147 Münster (DE); Schüßler, Michael, 12305 Berlin (DE); Yildirim, Mehmet, 10715 Berlin (DE)

(57) **Zusammenfassung**

Die Erfindung bezieht sich auf ein Verfahren zur Bereitstellung von Trainingsdaten (T) für adaptierbare Situationserkennungsalgorithmen, die zur automatisierten Erkennung einer Betriebssituation eines Fahrzeugs (1) zur öffentlichen Personenbeförderung, in dessen Fahrgastraum (3) Personen (P1) befördert werden und/oder auf dessen Fahrweg (2) Personen (P) außerhalb des Fahrzeugs (1) verkehren, verwendet werden. Während des Fahrzeugbetriebs werden von mindestens einer fahrzeugseitigen Sensoreinheit (6, 7) Sensordaten (V, A) mit Personenbezug erfasst. Vor einer Datenspeicherung wird der Personenbezug in den erfassten Sensordaten (V, A) durch datentechnische Bearbeitung derart abgeschwächt wird, dass aus den bearbeiteten Sensordaten (V', A') eine Identifikation von Personen nicht mehr, jedoch eine Erkennung einer Betriebssituation noch möglich ist. Die jeweils zu erkennende Betriebssituation wird durch menschliche Bewertung der bearbeiteten Sensordaten (V', A') ermittelt und den bearbeiteten Sensordaten (V', A') als Annotationsdaten zugeordnet. Schließlich werden die bearbeiteten Sensordaten (V', A') mit den zugeordneten Annotationsdaten als Trainingsdaten (T) für die Situationserkennungsalgorithmen abgespeichert. Damit wird ein Verfahren angegeben, mit dem eine große Menge an realistischen Trainingsdaten (T) für adaptierbare Situationserkennungsalgorithmen ohne datenschutzrechtliche Bedenken bereitgestellt werden kann.

## Beschreibung

Die Erfindung betrifft ein Verfahren zur Bereitstellung von Trainingsdaten für adaptierbare Situationserkennungsalgorithmen sowie ein Verfahren zur automatisierten Erkennung einer Betriebssituation eines Fahrzeugs zur öffentlichen Personenbeförderung, in dessen Fahrgastraum Personen befördert werden und/oder auf dessen Fahrweg Personen außerhalb des Fahrzeugs verkehren.

Es ist bekannt, den Betrieb von Fahrzeugen zur öffentlichen Personenbeförderung, beispielsweise von Straßen- und Untergrundbahnen sowie von Passagierzügen oder Bussen, durch Sensoren zu überwachen. Fahrzeug- oder infrastrukturseitig angeordnete Sensoren, wie zum Beispiel Video- und/oder Audioaufnahmegeräte, erfassen hierzu Sensordaten, die eine Betriebssituation des Fahrzeugs repräsentieren. Zur automatisierten Erkennung der jeweils aktuellen Betriebssituation werden die während des Fahrzeugbetriebs erfassten Sensordaten mittels adaptierbarer Situationserkennungsalgorithmen ver-arbeitet. Solche Situationserkennungsalgorithmen basieren auf maschinellen Lernverfahren, etwa künstlicher neuronaler Netze (engl.: Deep Neural Networks), die zum Anlernen und Optimieren ei-ne große Anzahl an Trainingsdaten benötigen.

Werden Personen in einem Fahrgastraum des Fahrzeugs befördert oder verkehren Personen außerhalb des Fahrzeugs auf einem Fahrweg des-selben, so handelt es sich bei den erfassten Video- und/oder Audiodaten um personenbezogene Daten, die aus Datenschutzgründen nicht ohne Weiteres aufgezeichnet werden dürfen. In der Praxis ist es daher schwierig, möglichst realistische Trainingsdaten in ausreichender Menge zu sammeln, da jede Aufzeichnung unter den Vorgaben des Datenschutzes durchzuführen ist und entweder die Einwilligung aller aufgezeichneten Personen oder eine Eliminierung des Personenbezugs erfordert. Die bekannten Verpixelungsverfahren zur Unkenntlichmachung von Gesichtern in Videodaten sind für den Einsatz im öffentlichen Personenverkehr nicht geeignet. Einerseits kann nicht garantiert werden, dass alle sichtbaren Gesichter auch tat-sächlich erkannt und dann verpixelt werden, insbesondere weil die Gesichter unter verschiedensten Blickwinkeln vorkommen. Andererseits verfälscht die Verpixelung die aufgezeichneten Videodaten, so dass das Training der Situationserkennungsalgorithmen negativ beeinflusst wird.

Der Erfindung liegt daher die Aufgabe zugrunde ein Verfahren anzugeben, mit dem eine große Menge an realistischen Trainingsdaten für adaptierbare Situationserkennungsalgorithmen ohne datenschutz-rechtliche Bedenken bereitgestellt werden kann.

Die Aufgabe wird erfindungsgemäß gelöst durch ein Verfahren gemäß Patentanspruch 1. Demnach ist das Verfahren dazu geeignet und vor-gesehen, Trainingsdaten für adaptierbare Situationserkennungsalgorithmen zur automatisierten Erkennung einer Betriebssituation eines Fahrzeugs zur öffentlichen Personenbeförderung, in dessen Fahrgastraum Personen befördert werden und/oder auf dessen Fahrweg Personen außerhalb des Fahrzeugs verkehren, bereitzustellen. Es werden während des Fahrzeugbetriebs von mindestens einer fahrzeugseitigen Sensoreinheit Sensordaten mit Personenbezug er-fasst. Vor einer Datenspeicherung wird der Personenbezug in den erfassten Sensordaten durch datentechnische Bearbeitung derart abgeschwächt, dass aus den bearbeiteten Sensordaten eine Identifikation von Personen nicht mehr, jedoch eine Erkennung einer Betriebssituation noch möglich ist. Durch Bewertung der bearbeiteten Sensordaten wird die jeweils zu erkennende Betriebssituation er-mittelt und den bearbeiteten Sensordaten als Annotationsdaten zu-geordnet. Schließlich werden die bearbeiteten Sensordaten mit den zugeordneten Annotationsdaten als Trainingsdaten für die Situationserkennungsalgorithmen abgespeichert. Nach Abschwächung des Personenbezugs in den Sensordaten können die bearbeiteten Sensor-daten gespeichert und weiterverarbeitet werden, ohne Datenschutz-recht zu verletzen. Damit können Sensordaten im realen Fahrzeugbetrieb in großer Menge erfasst werden, um möglichst viele Betriebssituationen in unterschiedlichsten Ausprägungen aufzunehmen und nach Annotation durch die jeweils zu erkennende Betriebssituation als Trainingsdaten abzuspeichern.

In einem bevorzugten Ausführungsbeispiel des erfindungsgemäßen Verfahrens ist die mindestens eine Sensoreinheit als digitales Videoaufnahmegerät ausgebildet und es werden als Sensordaten Videodaten mit Personenbezug in Form von Einzelbildern oder Bildsequenzen einer Betriebssituation erfasst. Werden zur Erkennung einer Betriebssituation Videodaten erfasst, so können diese derart bearbeitet werden, dass eine Individualisierung von Personen auf den Bildern nicht mehr möglich ist, jedoch eine Präsenz oder Bewegung von Personen erkennbar bleiben. Durch Bewertung derart bearbeiteter Videodaten kann die zu erkennende Betriebssituation ermittelt werden, ohne Datenschutzrecht zu verletzen, und die entsprechend annotierten, bearbeiteten Videodaten als Trainingsdaten abgespeichert werden.

In einem weiteren bevorzugten Ausführungsbeispiel des erfindungs-gemäßen Verfahrens ist die mindestens eine Sensoreinheit als digitales Audioaufnahmegerät ausgebildet und es werden als Sensordaten Audiodaten mit Personenbezug in Form von Sprachsequenzen einer Betriebssituation erfasst. Werden zur Erkennung einer Betriebssituation Audiodaten erfasst, so können diese derart bearbeitet werden, dass eine Individualisierung von Personen aus den Tonsequenzen nicht mehr möglich ist, jedoch eine ggf. aggressive Stimmlage erkennbar bleibt. Durch Bewertung derart bearbeiteter Audiodaten kann die zu erkennende Betriebssituation ermittelt werden, ohne Datenschutzrecht zu verletzen, und die entsprechend annotierten, bearbeiteten Videodaten als Trainingsdaten abgespeichert werden.

In einem weiteren bevorzugten Ausführungsbeispiel des erfindungs-gemäßen Verfahrens sind das Videoaufnahmegerät und/oder das Audio-aufnahmegerät derart angeordnet und ausgerichtet, dass aus den bearbeiteten Video- und/oder Audiodaten mindestens eine oder auch mehrere Betriebssituationen erkennbar ist. So kann als Betriebssituation die jeweilige Belegung von Sitzplätzen des Fahrzeugs durch Fahrgäste erkannt werden, also ob ein Sitzplatz frei oder durch einen Fahrgast belegt ist. Als weitere Betriebssituation kann eine Belegung von Sondernutzungsplätzen des Fahrzeugs durch Fahrgäste erkannt werden, also ob ein Sondernutzungsplatz frei oder durch einen Kinderwagen, ein Fahrrad, einen Rollstuhl und dergleichen belegt ist. Des Weiteren kann als Betriebssituation die Gesamtzahl an im Fahrzeug reisenden Fahrgästen erkannt werden. Ferner kann als Betriebssituation ein aggressives Verhalten eines Fahrgasts erkannt werden, also ob ein Fahrgast im Begriff ist, einen Akt von Vandalismus gegen Inventar des Fahrzeugs zu begehen oder andere Fahrgäste zu belästigen oder anzugreifen. Neben Betriebssituationen, die den Innenraum eines Fahr-zeugs betreffen, können auch Betriebssituationen im äußeren Umfeld des Fahrzeugs erkannt werden. Hierzu sind das Videoaufnahmegerät und/oder das Audioaufnahmegerät derart angeordnet und ausgerichtet, dass eine im Umfeld des Fahr-zeugs verkehrenden Person erfasst wird und durch Auswertung der Video-und/oder Audiodaten ermittelt wird, ob das Verhalten der Person eine Kollisionsgefahr mit dem Fahrzeug darstellt. Bei-spielsweise kann eine auf dem Fahrweg des Fahrzeugs stehende Person oder eine sich auf den Fahrweg zubewegende Person erkannt werden.

In einem weiteren bevorzugten Ausführungsbeispiel des erfindungs-gemäßen Verfahrens wird der Personenbezug in den erfassten Sensordaten durch datentechnische Vergröberung abgeschwächt. Bei Videodaten kann eine Vergröberung durch Reduktion der Bildauflösung von Einzelbildern, bei einer Bildsequenz gegebenenfalls auch von deren Bildwiederholrate, erreicht werden. Eine Vergröberung kann ebenfalls erreicht werden durch die Anwendung von Bildfiltern, die eine Tiefpasswirkung erzielen und dadurch Detailstrukturen des Bilds verwischen, was insbesondere zur Unkenntlichmachung der Gesichter von Personen führt. Es genügt dabei, die Videodaten komplett zu vergröbern, was die Bestimmung spezifischer, den Personenbezug enthaltender Bildbereiche erübrigt und damit einhergehende Aufwände und Fehler vermeidet. Bei Audiodaten kann eine datentechnische Vergröberung durch ein Verfremden des Datenmaterials mittels eines Tiefpassbildfilters erreicht werden, was die Stimmen von Personen verzerrt. In allen Fällen sind nach der Vergröberung Personen zur Situationserkennung noch erkennbar, aber deren Gesichter und Stimmen sind derart verfremdet, dass ein Rückschluss auf die Identität der Personen nicht mehr möglich ist. Der Grad der Vergröberung kann dabei fest eingestellt sein.

Vorzugsweise ist der Grad der datentechnischen Vergröberung in einem weiteren bevorzugten Ausführungsbeispiel des erfindungsgemäßen Verfahrens einstellbar. Hierdurch ist das Vergröberungsverfahren in einem weiten Bereich an die gegebenenfalls spezifischen Anforderungen der jeweiligen Datenschutzbehörden anpassbar, solange die Betriebssituation inhaltlich gerade noch erkennbar ist.

In einem weiteren bevorzugten Ausführungsbeispiel des erfindungs-gemäßen Verfahrens werden während des Fahrzeugbetriebs von mindestens einer weiteren fahrzeugseitigen Sensoreinheit Sensordaten oh-ne Personenbezug erfasst, wobei bei der Ermittlung der jeweils zu erkennenden Betriebssituation neben den bearbeiteten Sensordaten die erfassten Sensordaten ohne Personenbezug bewertet werden. Bei-spielsweise können als Sensordaten ohne Personenbezug 3D-Tiefendaten oder ein Wärmebild der Betriebssituation erfasst werden. Diese lassen keinen Rückschluss auf die Identität von erfassten Personen, jedoch - insbesondere in Kombination mit den durch Vergröberung bearbeiteten Sensordaten - eine Situationserkennung zu.

In einem weiteren bevorzugten Ausführungsbeispiel des erfindungs-gemäßen Verfahrens werden die erfassten Sensordaten vor einer Datenspeicherung durch einen parametrierbaren Vorverarbeitungsalgorithmus des Situationserkennungsalgorithmus vorverarbeitet. Die vorverarbeiteten Sensordaten ermöglichen dabei eine Identifikation von Personen nicht mehr, lassen aber Rückschlüsse auf die Betriebssituation zu. Die vorverarbeiteten Sensordaten werden als Trainingsdaten für die Situationserkennungsalgorithmen abgespeichert. Eine Speicherung der vorverarbeiteten Sensordaten ist datenschutzrechtlich unbedenklich, weil sich aus dem Zwischenergebnis der Vorverarbeitung die ursprünglichen Sensordaten nicht mehr rekonstruieren lassen. Beispielsweise kann der Vorverarbeitungsalgorithmus den optischen Fluss einer Bildsequenz ermitteln, also Bewegungsvektoren von markanten Punkten zwischen aufeinanderfolgenden Bildern der Bildsequenz. Der optische Fluss dient der Erkennung bestimmter, für eine Betriebssituation charakteristischer Bewegungen und kann als Trainingsdaten gespeichert werden, da aus ihm eine Rekonstruktion der ursprünglichen Videodaten nicht mög-lich ist. Als weiteres Beispiel können als Trainingsdaten die Neuronenzustände eines faltenden, künstlichen neuronalen Netzes (engl.: Convolutional Neural Network) nach der ersten Schicht gespeichert werden. Personen oder gar Gesichter sind aus diesen Vorverarbeitungsergebnissen nicht rekonstruierbar.

In einem weiteren bevorzugten Ausführungsbeispiel des erfindungs-gemäßen Verfahrens werden die erfassten Sensordaten vor einer Datenspeicherung durch die parametrierbaren Vorverarbeitungsalgorithmen mit unterschiedlichen Parametrierungen vorverarbeitet. Die anhand unterschiedlicher Parametrierungen vorverarbeiteten Sensordaten werden als Trainingsdaten für die Situationserkennungsalgorithmen abgespeichert. Dies ermöglicht eine Adaption der Situationserkennungsalgorithmen hinsichtlich einer optimalen Parametrierung. Je weiter der Bereich unterschiedlicher Parametrierungen gewählt wird, desto größer ist die Basis an zur Optimierung der Vorverarbeitungsalgorithmen zur Verfügung stehenden Trainingsdaten. Da beispielsweise keine Videodaten mit Personenbezug gespeichert werden dürfen, stehen diese Videodaten für eine nachträgliche Vorverarbeitung mit anderer Parametrierung nicht mehr zur Verfügung, so dass dieser Problematik durch die erfindungsgemäß parallele Vorverarbeitung der Sensordaten mit unterschiedlichen Parametrierungen zuvorgekommen wird.

Die Erfindung betrifft ferner ein Verfahren zur Erkennung einer Betriebssituation eines Fahrzeugs zur öffentlichen Personenbeförderung, in dessen Fahrgastraum Personen befördert werden und/oder auf dessen Verkehrsweg Personen außerhalb des Fahrzeugs verkehren, wobei während des Fahrzeugbetriebs von mindestens einer fahrzeugseitigen Sensoreinheit Sensordaten mit Personenbezug erfasst werden, wobei mittels adaptierbarer Situationserkennungsalgorithmen aus den erfassten Sensordaten automatisiert die aktuelle Betriebssituation des Fahrzeugs erkannt wird, und wobei die Situationserkennungsalgorithmen unter Verwendung von Trainingsdaten adaptiert sind, die nach einem Verfahren der Ansprüche 1 bis 9 bereitgestellt wurden.

Die Erfindung betrifft auch ein Computerprogrammprodukt, umfassend Befehle, die bei der Ausführung des Programms durch eine Recheneinheit diese veranlassen, das Verfahren nach einem der Ansprüche 1 bis 10 auszuführen.

Ferner betrifft die Erfindung auch ein computerlesbares Speichermedium, umfassend Befehle, die bei der Ausführung durch eine Recheneinheit diese veranlassen, das Verfahren nach einem der Ansprüche 1 bis 10 auszuführen.

Weitere Eigenschaften und Vorteile der Erfindung ergeben sich aus nachfolgender Beschreibung anhand der Zeichnungen, in deren
- FIG 1: ein zur Durchführung des erfindungsgemäßen Verfahrens zur automatisierten Erkennung von Betriebssituationen ausgestattetes Fahrzeug und
- FIG 2: ein Ablaufschema für das erfindungsgemäße Verfahren zur Bereitstellung von Trainingsdaten für adaptierbare Situationserkennungsalgorithmen
schematisch veranschaulicht sind.

Nachfolgend wird die Erfindung beispielhaft anhand eines Schienenfahrzeugs als Fahrzeug zur öffentlichen Personenbeförderung beschrieben, wobei die Erfindung für jedes andere solche Fahrzeug, wie zum Beispiel Straßen-, Wasser- oder Luftfahrzeugs, anwendbar ist.

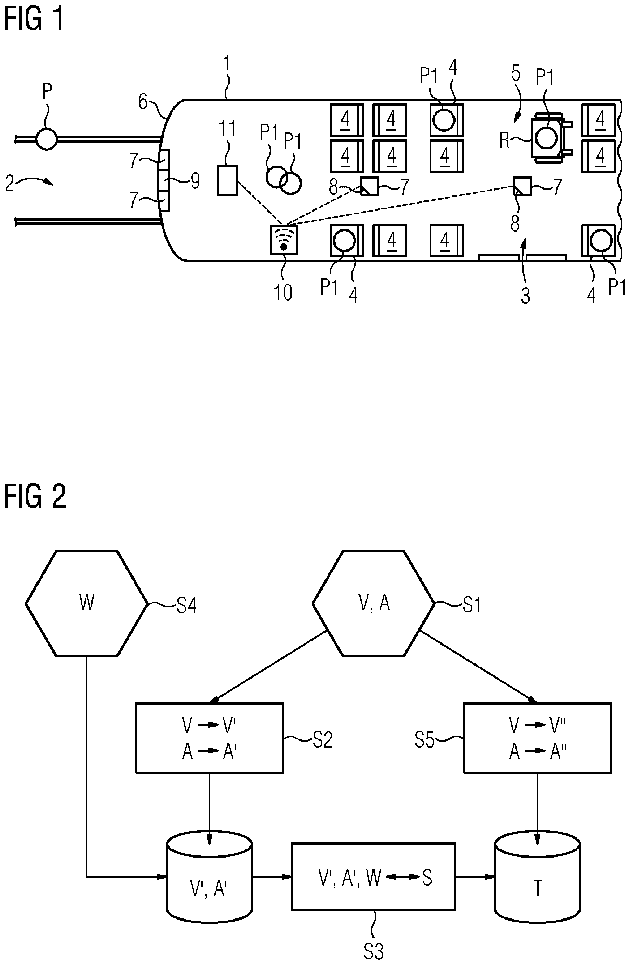

Gemäß FIG 1 wird ein an sich bekanntes Schienenfahrzeug 1, beispielsweise ein Passagierzug, auf einem durch eine Gleisanlage gebildeten Fahrweg 2 betrieben. Zur Beförderung von Personen P1 sind in einem Fahrgastraum 3 des Schienenfahrzeugs 1 Sitzplätze 4 sowie Sondernutzungsplätze 5 für Rollstühle R, Kinderwägen, Fahrräder und dergleichen angeordnet. Auf dem Fahrweg 2 können aber auch außerhalb des Schienenfahrzeugs 1 Personen P verkehren, beispielsweise auf Bahn-übergängen oder generell im Innenstadtbereich.

Zur Erkennung verschiedener Betriebssituationen des Schienenfahrzeugs 1 sind an einer Decke des Fahrgastraums 3 und/oder an einer Fahrzeugfront 6 des Schienenfahrzeugs 1 mindestens eine als digitales Videoaufnahmegerät 7 ausgebildete Sensoreinheit derart angeordnet und ausgerichtet, dass die erfassten Videodaten V Informationen über die Betriebssituationen S enthalten. Weitere Informationen über Betriebssituationen enthalten Audiodaten A, die von mindestens einer als digitales Audioaufnahmegerät 8 ausgebildeten Sensoreinheit er-fasst werden. Sowohl die Videodaten V in Form von Einzelbildern oder Bildsequenzen als auch die Audiodaten A in Form von Tonsequenzen können einen Bezug zu Personen in Gestalt von Gesichtern oder Stimmen enthalten, aufgrund dessen eine Speicherung dieser Daten V, A datenschutzrechtlich problematisch ist, da ein Rückschluss auf Personen möglich wäre.

Zur automatisierten Erkennung der aktuellen Betriebssituation werden die erfassten Sensordaten V, A beispielsweise über ein fahrzeugseitiges lokales drahtloses Datennetzwerk 10 einer Recheneinheit 11 zugeführt, auf dem ein Computerprogramm mit adaptierbaren Situationserkennungsalgorithmen ausgeführt wird. Solche Situationserkennungsalgorithmen können bei-spielsweise als faltendes neuronales Netz (engl.: Convolutional Neural Network) ausgebildet sein und erkennen als Betriebssituation,
- ob ein Sitzplatz 4 durch eine Person P1 belegt ist oder nicht,
- ob ein Sondernutzungsplatz 5 durch eine berechtigte Person P1 mit Rollstuhl R, Kinderwagen, Fahrrad und dergleichen belegt ist oder nicht,
- ob sich Personen P1 im Schienenfahrzeug 1 aggressiv gegen Inventar oder andere Fahrgäste verhalten,
- die Anzahl von Personen P1 im Schienenfahrzeug 1
- ob sich Personen P außerhalb des Schienenfahrzeugs 1 kollisionsgefährdend verhalten.
Zum Anlernen und Optimieren der adaptierbaren Situationserkennungsalgorithmen wird eine große Datenbasis an Trainingsdaten T bereitgestellt, die eine breite Vielfalt an im realen Fahrbetrieb vorkommenden Situationen S enthält und ohne Verletzung von Datenschutzrecht abgespeichert werden kann.

Gemäß FIG 2 startet das erfindungsgemäße Verfahren zur Bereitstellung von Trainingsdaten T für die adaptierbaren Situationserkennungsalgorithmen mit der Erfassung von Sensordaten in Form von Videodaten V und/oder Audiodaten A mit Personenbezug durch mehrere fahrzeugseitige Sensoreinheiten in Form von Videoaufnahmegeräten 7 bzw. Audioaufnahmegeräten 8 während des Passagierbetriebs des Schienenfahrzeugs 1 (Schritt S1). Dies erfolgt wie anhand von FIG 1 beschrieben und über Zeiträume von vielen Wochen, um eine große Bandbreite von realistischen Szenen für das Training zu erhalten.

Vor einer Datenspeicherung wird der Personenbezug in den erfassten Sensordaten V, A durch datentechnische Bearbeitung automatisiert derart abgeschwächt, dass aus den bearbeiteten Sensordaten V', A' eine Identifikation von Personen nicht mehr, jedoch eine Erkennung einer Betriebssituation noch mög-lich ist (Schritt S2). Hierdurch wird eine Speicherung personenbezogener Daten vermieden. Die Abschwächung des Personenbezugs erfolgt automatisiert durch eine datentechnische Vergröberung der Sensordaten V, A. Auf den vergröberten Bildern V' sind keine Gesichter mehr erkennbar, es bleiben dennoch alle die Betriebssituation charakterisierenden Sachverhalte ungefähr erkennbar, wie beispielsweise aggressive Handlungen, sowie die Belegung der Sitzplätze 4 und Sondernutzungsplätze 5. In den vergröberten Tonsequenzen A' sind keine individuellen Stimmen mehr enthalten, jedoch sind für aggressives Verhalten charakteristische Stimmschwankungen erkennbar. Vergröberungen von Bildern können beispielsweise durch Reduktion ihrer Auflösung erreicht werden, wobei jeder Bildblock von m x n Pixeln auf einen einzigen Pixelwert reduziert wird. Ebenfalls möglich ist die Anwendung von Bildfiltern, die eine Tiefpasswirkung erzielen und somit Detailstrukturen des Bilds verwischen, was insbesondere zur Unkenntlichmachung der Gesichter führt. Ein Vorteil der Vergröberung besteht darin, dass ihr Vergröberungsgrad in einem weiten Bereich an eine gegebenenfalls spezifische Anforderung der Datenschutzbehörde angepasst werden kann, solange die Szene inhaltlich gerade noch erkennbar ist. Bei Audiodaten A kann der Personenbezug durch Verfremdung oder durch Beschränkung der aufzuzeichnenden Frequenzen so abgeschwächt werden, dass weder der Inhalt der Sprache noch die Identität des Sprechers daraus abgeleitet werden können, jedoch der Charakter der Szene, zum Beispiel aggressives Verhalten, noch erkennbar bleibt. Als bearbeitete Audiodaten A' kann beispielsweise eine spektrale Zerlegung oder ähnliches verwenden werden.

Die bearbeiteten Sensordaten V', A' mit abgeschwächtem Personenbezug werden nun einer Bewertung, insbesondere einer menschlichen Inaugenscheinnahme bzw. Anhörung, zugänglich gemacht, wobei die jeweils zu erkennende Betriebssituation er-mittelt und den bearbeiteten Sensordaten V' bzw. A' als Annotationsdaten S zugeordnet wird (Schritt S3). Die Videos oder Bilder werden durch menschliche Arbeitskräfte annotiert, das heißt, es werden die korrekten Informationen darüber vermerkt, was im Video oder Bild zu sehen ist. Daraus können dann Mengen von nach Kategorien sortierten Beispielen für das Training gebildet werden. Die menschlichen Arbeitskräfte können die Information erfassen und vermerken, auch wenn die Bilder für die Situationserkennungsalgorithmen aufgrund ihrer geringen Auflösung unbrauchbar sind.

Die bearbeiteten Sensordaten V', A' werden schließlich mit den zugeordneten Annotationsdaten S als Trainingsdaten T für die Situationserkennungsalgorithmen abgespeichert. Damit steht eine breite Datenbasis für das Training zum Anlernen aber auch zur späteren Optimierung der adaptiven Situationserkennungsalgorithmen zur Verfügung.

Die Datenbasis zum Trainieren der Situationserkennungsalgorithmen wird in vorteilhafter Weise verbessert, wenn während des Fahrzeugbetriebs von mindestens einer weiteren fahrzeugseitigen Sensoreinheit 9 Sensordaten W ohne Personenbezug er-fasst werden (Schritt 4) und diese neben den bearbeiteten Sensordaten V', A' bei der Ermittlung der jeweils zu erkennenden Betriebssituation bewertet werden (Schritt S3). Neben der Verfremdung und Reduzierung der erfassten Video- und/oder Audiodaten V, A werden zur Annotierung zusätzlich die Sensor-daten W anderer Sensoren 9 verwendet, die gleichzeitig zu den Video-/Audiodaten V, A aufgenommen werden. Solche Daten W können zum Beispiel von Wärmebildkameras 9 aufgenommene Bilder einer Betriebssituation oder 3D-Tiefendaten sein. Durch die zusätzliche Bewertung solcher Daten W wird die Zuordnung von zu erkennenden Betriebssituationen vereinfacht und die automatisierte Situationserkennung verbessert.

Im beschriebenen Ausführungsbeispiel werden die erfassten Sensordaten V, A mit Personenbezug durch Vorverarbeitungsalgorithmen der Situationserkennungsalgorithmen vorverarbeitet, wobei die vorverarbeiteten Sensordaten V", A" eine Identifikation von Personen Pl, P nicht mehr, jedoch Rückschlüsse auf die Betriebssituation noch ermöglichen (Schritt S5). Neben der bereits geschilderten Vergröberung kann eine Vorverarbeitung von Videodaten V in der Anwendung eines Kanten- und Eckenfilters zur Erkennung von Bildstrukturen, in der Reduktion der Farbtiefe oder in der Ermittlung des optischen Flusses in einer Bildsequenz bestehen. Bei dem optischen Fluss handelt es sich um Bewegungsvektoren markanter Bildpunkte von einem zum nächsten Videobild; Personen Pl, P oder gar Gesichter sind aus diesen Daten V" nicht mehr rekonstruierbar. Arbeiten die Situationserkennungsalgorithmen auf der Basis neuronaler Netze, beispielsweise faltender neuronaler Netzwerke, so können deren jeweils erste Schichten als Vorverarbeitungsalgorithmen verstanden werden, die der Extraktion einfachster Bildmerkmale dienen. Die Neuronenzustände eines Convolutional Neural Networks nach der ersten Schicht können als Vorverarbeitungsergebnis V" gespeichert werden. Dabei werden ausschließlich Zwischenergebnisse aus der Vorverarbeitung, die keine Rekonstruktion der Originaldaten mehr zulassen, gespeichert.

Sind die Vorverarbeitungsalgorithmen parametrierbar, so werden die erfassten Sensordaten V, A vor einer Datenspeicherung durch den parametrierbaren Vorverarbeitungsalgorithmus mit unterschiedlichen Parametrierungen vorverarbeitet. Da die vorverarbeiteten Sensordaten V", A" bereits aus der algorithmischen Vorverarbeitung stammen und dazu entsprechend parametriert wurden, besteht das grundsätzliche Problem, dass man spätere Änderungen an der Parametrierung nicht mehr durchführen kann, da hierfür die originalen Video- bzw. Audiodaten V, A benötigt würden, die ja gerade nicht aufgezeichnet werden dürfen. Um dieses Problem abzumildern und um sich die Flexibilität in der Parametrierung weitestgehend zu erhalten, wird vorgeschlagen, mehrere, durch in einem weiten Bereich unterschiedlich parametrierte Vorverarbeitungsalgorithmen erzeugte Zwischen-ergebnisse V", A" abzuspeichern. Die anhand unterschiedlicher Parametrierungen vorverarbeiteten Sensordaten V", A" stehen somit - zusätzlich zu den Annotationsdaten S - als Trainingsdaten T für die Situationserkennungsalgorithmen zur Verfügung, ohne dass Persönlichkeitsrechte verletzende Daten gespeichert werden.

Das beschrieben Verfahren ist nicht auf die hier beispielhaft angeführten Video- und Audiodaten V, A beschränkt, sondern kann für alle datenschutzrechtlich sensiblen Sensordaten sinngemäß verwendet werden, welche für die Entwicklung, Weiterentwicklung und das Training von adaptierbaren Situationserkennungsalgorithmen - auch längerfristig - benötigt, aber aus datenschutzrechtlichen Gründen bislang nicht dafür genutzt werden können, weil eine Aufzeichnung und auch eine Weitergabe an Entwicklungsdienstleister aus diesen Gründen nicht möglich ist.

Die durch das erfindungsgemäße Verfahren generierten Trainingsdaten T sind datenschutzrechtlich unkritisch, weil sie keine Identifikation der Personen mehr ermöglichen. Es ist dabei wichtig, dass auch durch Kombination der erfassten Daten keine Rekonstruktion der Originaldaten möglich sein darf, die eine Identifikation der Personen zulassen würde. Damit stehen die so aufgezeichneten Daten überhaupt und theoretisch für unbegrenzte Zeit für die Verbesserung der Erkennungsleistung der Situationserkennungsalgorithmen zur Verfügung. Ferner erhält man sich die Möglichkeit, Referenzdaten zu einem späteren Zeitpunkt zum Beispiel manuell erfassen und jederzeit auch korrigieren zu können. Außerdem ist es durch die Aufzeichnung unterschiedlich parametrierter Vorverarbeitungsergebnisse eine weitgehende Anpassbarkeit der Verarbeitung inklusive der Vorverarbeitung gegeben.

## Patentansprüche

1. Verfahren zur Bereitstellung von Trainingsdaten (T) für adaptierbare Situationserkennungsalgorithmen zur automatisierten Erkennung einer Betriebssituation eines Fahrzeugs (1) zur öffentlichen Personenbeförderung, in dessen Fahrgastraum (3) Personen (P1) befördert werden und/oder auf dessen Fahrweg (2) Personen (P) außerhalb des Fahrzeugs (1) verkehren,
- wobei während des Fahrzeugbetriebs von mindestens einer fahrzeugseitigen Sensoreinheit (6, 7) Sensordaten (V, A) mit Personenbezug erfasst werden,
- wobei vor einer Datenspeicherung der Personenbezug in den erfassten Sensordaten (V, A) durch datentechnische Bearbeitung derart abgeschwächt wird, dass aus den bearbeiteten Sensordaten (V', A') eine Identifikation von Personen nicht mehr, jedoch eine Erkennung einer Betriebssituation noch mög-lich ist,
- wobei durch menschliche Bewertung der bearbeiteten Sensor-daten (V', A') die jeweils zu erkennende Betriebssituation ermittelt und den bearbeiteten Sensordaten (V', A') als Annotationsdaten (S) zugeordnet wird, und
- wobei die bearbeiteten Sensordaten (V', A') mit den zugeordneten Annotationsdaten (S) als Trainingsdaten (T) für die Situationserkennungsalgorithmen abgespeichert werden.

2. Verfahren nach Anspruch 1,
- wobei die mindestens eine Sensoreinheit (6) als digitales Videoaufnahmegerät ausgebildet ist und als Sensordaten (V) Videodaten mit Personenbezug in Form von Einzelbildern oder Bildsequenzen einer Betriebssituation erfasst werden.

3. Verfahren nach Anspruch 1 oder 2,
- wobei die mindestens eine Sensoreinheit (7) als digitales Audioaufnahmegerät ausgebildet ist und als Sensordaten (A) Audiodaten mit Personenbezug in Form von Sprachsequenzen einer Betriebssituation erfasst werden.

4. Verfahren nach Anspruch 2 oder 3,
- wobei das Videoaufnahmegerät (6) und/oder das Audioaufnahmegerät (7) derart angeordnet und ausgerichtet sind, dass aus den bearbeiteten Video- und/oder Audiodaten (V', A') mindestens eine der folgenden Betriebssituationen erkennbar ist:
- eine Belegung von Sitzplätzen (4) des Fahrzeugs (1) durch Fahrgäste (P1),
- eine Belegung von Sondernutzungsplätzen (5) des Fahrzeugs (1) durch Fahrgäste (P1),
- eine Gesamtzahl an im Fahrzeug (1) reisenden Fahrgästen (P1),
- ein aggressives Verhalten eines Fahrgasts (P1) oder einer im Umfeld des Fahrzeugs (1) verkehrenden Person (P),
- ein kollisionsgefährdendes Verhalten einer im Umfeld des Fahrzeugs (1) verkehrenden Person (P).

5. Verfahren nach einem der Ansprüche 1 bis 4,
- wobei der Personenbezug in den erfassten Sensordaten (V, A) durch datentechnische Vergröberung abgeschwächt wird.

6. Verfahren nach Anspruch 5,
- wobei ein Grad der datentechnischen Vergröberung einstellbar ist.

7. Verfahren nach einem der Ansprüche 1 bis 6,
- wobei während des Fahrzeugbetriebs von mindestens einer weiteren fahrzeugseitigen Sensoreinheit (8) Sensordaten (W) ohne Personenbezug erfasst werden, und
- wobei bei der Ermittlung der jeweils zu erkennenden Betriebssituation neben den bearbeiteten Sensordaten (V', A') die erfassten Sensordaten (W) ohne Personenbezug bewertet werden.

8. Verfahren nach einem der Ansprüche 1 bis 7,
- wobei die erfassten Sensordaten (V, A) vor einer Datenspeicherung durch einen parametrierbaren Vorverarbeitungsalgorithmus des Situationserkennungsalgorithmus vorverarbeitet werden,
- wobei die vorverarbeiteten Sensordaten (V", A") eine Identifikation von Personen nicht mehr, jedoch Rückschlüsse auf die Betriebssituation noch ermöglichen,
- wobei die vorverarbeiteten Sensordaten (V", A") als Trainingsdaten (T) für die Situationserkennungsalgorithmen abgespeichert werden.

9. Verfahren nach Anspruch 8,
- wobei die erfassten Sensordaten (V, A) vor einer Datenspeicherung durch den parametrierbaren Vorverarbeitungsalgorithmus mit unterschiedlichen Parametrierungen vorverarbeitet werden, und
- wobei die anhand unterschiedlicher Parametrierungen vorverarbeiteten Sensordaten (V", A") als Trainingsdaten (T) für die Situationserkennungsalgorithmen abgespeichert werden.

10. Verfahren zur Erkennung einer Betriebssituation eines Fahrzeugs (1) zur öffentlichen Personenbeförderung, in dessen Fahrgastraum (3) Personen (P1) befördert werden und/oder auf dessen Fahrweg (2) Personen (P) außerhalb des Fahrzeugs (1) verkehren,
- wobei während des Fahrzeugbetriebs von mindestens einer fahrzeugseitigen Sensoreinheit (6, 7) Sensordaten (V, A) mit Personenbezug erfasst werden,
- wobei mittels adaptierbarer Situationserkennungsalgorithmen aus den erfassten Sensordaten automatisiert die aktuelle Betriebssituation des Fahrzeugs (1) erkannt wird,
- wobei die Situationserkennungsalgorithmen unter Verwendung von Trainingsdaten (T) adaptiert sind, die nach einem Verfahren der Ansprüche 1 bis 9 bereitgestellt wurden.

11. Computerprogrammprodukt, umfassend Befehle, die bei der Ausführung des Programms durch eine Recheneinheit (10) diese veranlassen, ein Verfahren nach einem der Ansprüche 1 bis 10 auszuführen.

12. Computerlesbares Speichermedium, umfassend Befehle, die bei der Ausführung durch eine Recheneinheit (10) diese veranlassen, ein Verfahren nach einem Ansprüche 1 bis 10 auszuführen.
